# EUROPEAN PATENT SPECIFICATION

(11) **EP 1 278 171 B1**
(45) Date of publication and mention of the grant of the patent: **24.09.2008**
(21) Application number: 01309856.1
(22) Date of filing: 23.11.2001
(51) Int. Cl.: G08C 23/04, G08C 19/28, A63H 30/04

(54) **Remote control system and transmitter and drive for the same**
Fernsteuerungssystem und Sender und Antrieb dafür
Système de télécommande et émetteur et entraînement pour le système de télécommande

(30) Priority: 17.07.2001 JP 2001217304
(43) Date of publication of application: 22.01.2003
(60) Divisional application: 07104682.5
(73) Proprietor: Konami Digital Entertainment Co., Ltd., Tokyo 107-8324 (JP)
(72) Inventor: Yamaguchi, Takashi, c/o Konami Corporation, Tokyo (JP); Wada, Jingo, c/o Konami Corporation, Tokyo (JP)
(74) Representative: Haley, Stephen

(56) References cited:
- FR-A- 2 727 553
- US-A- 5 781 143
- US-A- 5 885 159

## Description

The present invention relates to a system for remote-controlling a drive, such as an automobile, a robot, or the like.

When remote-controlling a plurality of drives at the same place by infrared radiation or radio waves, it may be difficult to accurately control the drives because signals sent from a transmitter to the drives interfere with each other. As a remote control system for solving the above problem, a system is studied in which identification information is set to a transmitter and a drive respectively to separate relations between the transmitter and the drive from each other in accordance with match or mismatch between these pieces of identification information. In the case of the system, the transmitter is provided with device for transmitting the data including identification information for designating a drive to be controlled and control information for controlling the drive and the drive is provided with device for discriminating the control information for the device or not by comparing the identification information included in received data with the identification information set to the drive. Moreover, when the above pieces of identification information match with each other, the controller of the drive discriminates the control information as the control information for the controller and performs the operation control based on the control information.

The above remote control system makes it possible to accurately control a purposed drive for each transmitter even under an environment in which a plurality of transmitters are present by changing identification information for each transmitter. Moreover, by making it possible for one transmitter to use a plurality of pieces of identification information in an alternate way, it is also possible to selectively control a plurality of drives by one transmitter.

However, when separating relations between a transmitter and a drive from each other in accordance with identification information, it is necessary that pieces of identification information for drives to be simultaneously controlled at the same place are different from each other. In this case, if the identification information for a drive is fixed and therefore, the information cannot be changed, a user has to purchase a new drive so that the drive identification information the user already has does not overlap with the fixed identification information but this is troublesome. Moreover, when a plurality of users use transmitters at the same place, there is a disadvantage that a drive to which the identification information same as the identification information already used is set cannot be used.

Moreover, it is necessary that a manufacturer of drives separately manufactures every a plurality of types of drives correspondingly to every identification information usable by transmitters and thereby, production control become complicated. Moreover, for circulation of drives and suppliers, the labor for stock management increases.

In the case of a so-called radio-control toy using radio waves, a mechanism is provided in which a user selects the frequency of a radio wave and individually controls a plurality of units by replacing components referred to as crystal. However, when changing identification information through component replacement, there is a disadvantage that the identification information cannot be changed unless the user has a purposed component.

Therefore, it is an object of the present invention to provide a remote control system allowing a user to set the identification information for relating a transmitter with a drive but not requiring replacement of special components when setting the identification information.

FR-A-2727553, US-A-5885159 and US-A-5781143 all disclose remote control systems with transmitters and drives.

FR-A-2727553 discloses a transmitter which is able to associate the new address with the stop message from its output stage to the input stage of the receiver. The latter is able to take account of the new address if it receives two identical stop messages in succession and the address in its memory differs from the one received.

US-A-5885159 discloses pads which remotely control the operation of vehicles. Each of the pads formulates in binary form a composite address identifying such pad and the selected one of the vehicles and stores this composite address in the random access memory.

US-A-5781143 discloses a method and apparatus to automatically store unique identity code of a plurality of wireless transmitters into permanent memory of a receive control. By specifying and establishing in the receiver control the quantity of transmitters to be installed and causing each transmitter to transmit identity code along with a longer than normal preamble, new identity codes will be stored in receiver control memory.

In order to achieve the above object, according to one aspect of the present invention, there is provided a system for remote-controlling a drive in accordance with data sent from a transmitter; wherein the transmitter is provided with:
a data generation device for generating the data including identification information for relating the transmitter with the drive, operation control information for controlling operations of the drive, and discrimination information for discriminating the data for operation control or the data for change of identification information in accordance with an operation of a predetermined input unit performed by a user; and
a transmission device for transmitting the data,
and wherein the drive is provided with:
   a reception device for receiving the data transmitted from the transmitter;
   a storage device for storing identification information assigned to the drive itself;
   a first discrimination device for discriminating whether received data is the data for operation control or the data for change of identification information in accordance with the discrimination information included in the received data;
   a second discrimination device for discriminating whether the received data is the data transmitted to the drive itself or not by comparing the identification information included in the received data with the identification information stored in the storage device;
   a control device for executing the operation control in accordance with the operation control information included in the data discriminated as the data for operation control and as the data transmitted to the drive itself; and
   an identification-information change device for changing the identification information stored in the storage device in accordance with the identification information included in the data discriminated as the data for change of the identification information,
   wherein the identification information includes transmitter-specifying information for distinguishing a plurality of transmitters from each other and drive-specifying information for distinguishing a plurality of drives from each other;
   the data generation device of the transmitter is configured to independently change each of the transmitter specifying information and the drive-specifying information included in the data in accordance wi th an operation of the input performed by the user;
   the second discrimination device of the drive is configured to discriminate that the received data is the data transmitted to the drive itself when the transmitter specifying information and the drive-specifying information included in the received data coincide with the transmitter-specifying information and the drive specifying information stored in the storage device, and
   the identification-information change device of the drive is configured to change the transmitter-specifying information and the drive specifying information stored in the storage device in accordance with the transmitter-specifying information and the drive-specifying information included in the data discriminated as the data for change of the identification information.

According to the remote control system of the present invention, by including discrimination information in the data transmitted from a transmitter, it is made possible for a drive to discriminate whether the data transmitted from the transmitter to the drive is the data for operation control or the data for change of the identification information, control the operations of the drive in accordance with the control information included in the data when the data is the data for operation control, and change the identification information stored in storage device in accordance with the identification information included in the data when the data is the data for change of the identification information. Moreover, by using identification information and thereby discriminating whether the data is transmitted to the drive itself or not, it is possible to distinguishably control a plurality of drives.

Thus, in the case of the present invention, because a user can set the identification information for relating a transmitter with a drive, it is unnecessary to perform production management or stock management of drives in accordance with the type of identification information and the labors necessary for production, circulation and sale of drives are reduced. Moreover, because a user can set identification information by a transmitter, the user does not need to always prepare special components for change of identification information and thus, the user can easily enjoy remote control. Moreover, in a transmitter, at least some of the circuits for transmitting the data for operation control to a transmitter can also be used for transmission of the data for change of identification information, and in a drive, at least some of the circuits for receiving the data for operation control can also be used for reception of the data for change of identification information. Therefore, it is possible to reduce the numbers of components of a transmitter and a drive and contribute to reduction in costs and sizes of them.

In the case of the remote control system of the present invention, it may be allowed that when a predetermined identification-information-change-designating operation is performed on the input unit, the data generation device of the transmitter generates the data so that change-designating information for designating change of the identification information is added to the discrimination information and the identification information, which is set through the input unit when the change of the identification information is designated, is included in the data, and the first discrimination device discriminates whether or not the received data is the data for change of the identification information based on whether or not the change-designating information is added to the discrimination information.

In this case, the identification information for the drive is changed when the user sets desired identification information, and then performs an identification-information-change-designating operation.

It may also be allowed that the identification information includes transmitter-specifying information for distinguishing a plurality of transmitters from each other and drive-specifying information for distinguishing a plurality of drives from each other, the data generation device of the transmitter can independently change the transmitter-specifying information and the drive-specifying information included in the data in accordance with an operation of the input unit performed by the user, and the second discrimination device of the drive discriminates that the received data is the data transmitted to the drive itself when the transmitter-specifying information and the drive-specifying information included in the received data coincide with the transmitter-specifying information and the drive-specifying information stored in the storage device.

In this case, because the relation between the transmitter and the drive can be changed even if any one of the transmitter-specifying information and the drive-specifying information is changed, it is possible to realize various combinations. For example, when a plurality of drives are controlled by one transmitter, it is made to match the transmitter-specifying information of the transmitter with the transmitter-specifying information of each drive while it is made to change the drive-specifying information every drive. Then, by changing the drive-specifying information in the data to be sent from the transmitter correspondingly to a drive to be controlled, it is possible to independently control the respective drives. Moreover, when a plurality of transmitters are simultaneously used, it is possible to correctly relate a transmitter with a drive and control them by changing transmitter-specifying information for each transmitter even if pieces of drive-specifying information are matched with each other. According to the above mechanism, it is possible to control a plurality of drives separately from each other by each transmitter even under an environment in which a plurality of transmitters are simultaneously operated.

In the case of the remote control system of the present invention, it may be allowed for the identification-information change device to change the identification information when the reception state of the data for change of the identification information meets a predetermined condition. For example, it may be allowed to change the identification information by assuming that the condition is satisfied when receiving the data for change of the identification information a predetermined number of times. Thus, it is possible to eliminate a fear that identification information is unexpectedly changed due to noises and resultantly improve reliability.

It may also be allowed for the storage device of the drive to include a nonvolatile memory. In this case, the identification information is held with no backup of a power source and thus a user can repeatedly change the identification information.

According to the another aspect of the present invention, there is provided a transmitter for remote-controlling a drive, comprising:
a data generation device for generating data including identification information for relating the transmitter with the drive, operation control information for controlling operations of the drive, and discrimination information for discriminating the data for operation control or the data for change of identification information in accordance with an operation of a predetermined input unit performed by a user; and
a transmission device for transmitting the data,
wherein the identification information includes transmitter-specifying information for distinguishing a plurality of transmitters rom each other and drive-specifying information for distinguishing a plurality of drives from each other, and
the data generation device can independently change each of the transmitter-specifying information and the drive-specifying information included in the data in accordance with an operation on of the input unit performed by the user.

Moreover, according to still another aspect of the present invention, there is provided a drive to be controlled in accordance with data sent from a transmitter, comprising
a reception device for receiving the data transmitted from the transmitter, the data including identification information for relating the transmitter with the drive, operation control information for controlling operations of the drive, and discrimination information for discriminating the data for operation control or the data for change of identification information;
a storage device for storing identification information assigned to the drive itself;
a first discrimination device for discriminating whether received data is the data for operation control or the data for change of identification information in accordance with the discrimination information included in the received data;
a second discrimination device for discriminating whether received data is the data transmitted to the drive itself or not by comparing the identification information included in the received data with the identification information stored in the storage device;
a control device for executing operation control in accordance with the operation control information included in the data discriminated as the data for the operation control and as the data transmitted to the drive itself; and
an identification-information change device for changing the identification information stored in the storage device in accordance with the identification information included in the data discriminated as the data for change of the identification information;
wherein the identification information includes transmitter-specifying information for distinguishing a plurality of transmitters from each other, and drive-specifying information for distinguishing a plurality of drives from each other, and
the second discrimination device discriminates that the received data is the data transmitted to the drive itself when the transmitter-specifying information and the drive-specifying information included in the received data coincide with the transmitter-specifying information and drive-specifying information stored in the storage device.

By combining the above transmitter and drive, it is possible to realize the remote control system of the present invention.

In the case of a transmitter according to the present invention, it may also be allowed that when a predetermined identification-information-change-designating operation is performed on the input unit, the data generation device generates the data so that change-designating information for designating the change of the identification information is added to the discrimination information and the identification information, which is set through the input unit when the change of the identification information is designated, is included in the data. It may also be allowed that the identification information includes transmitter-specifying information for distinguishing a plurality of transmitters from each other and drive-specifying information for distinguishing a plurality of drives from each other and the data generation device can independently change the transmitter-specifying information and the drive-specifying information included in the data in accordance with an operation of the input unit performed by the user.

Moreover, in the case of a drive according to the present invention, it may be allowed that the first discrimination device discriminates whether or not the received data is the data for change of the identification information based on whether or not predetermined change-designating information is added to the discrimination information. It may be allowed that the identification information includes transmitter-specifying information for distinguishing a plurality of transmitters from each other and drive-specifying information for distinguishing a plurality of drives from each other and the second discrimination device discriminates that the received data is the data transmitted to the drive itself when the transmitter-specifying information and drive-specifying information included in the received data coincide with the transmitter-specifying information and drive-specifying information stored in the storage device, respectively.

When a plurality of transmitters, each of which is the same as the above transmitter, are used at the same time, it may be allowed to set timings when transmitters transmit data to periods different from each other in accordance with the transmitter-specifying information set to the respective transmitters. For example, it is preferable to provide each of the transmitters with a reception device for receiving the data transmitted from another transmitter and a timing setting device for setting self-data transmission timing so that the self-data transmission timing does not overlap with the transmission timing of the data sent from the other transmitters.

In the Drawings;
FIG. 1 is an illustration showing a schematic configuration of a remote-control system of the present invention;
FIG. 2 is a perspective view of the front-side appearance of a transmitter;
FIG. 3 is a back view of a transmitter;
FIG. 4 is a sectional view of a concave portion formed at the front side of a transmitter;
FIG. 5 is a functional block diagram of a transmitter;
FIGS. 6A and 6B are illustrations showing states of transmitting data from transmitters;
FIG. 7 is an illustration showing an electric-train model as an example of a drive;
FIG. 8 is a functional block diagram of an electric-train model;
FIG. 9 is a flowchart showing the processing for a transmitter to transmit data;
FIG. 10 is a flowchart showing the processing for a drive to receive data;
FIGS. 11A and 11B are illustrations showing relations between transmitters and drives corresponding to identification-information set states; and
FIGS. 12A and 12B are illustrations showing other relations between transmitters and drives corresponding to identification-information set states.

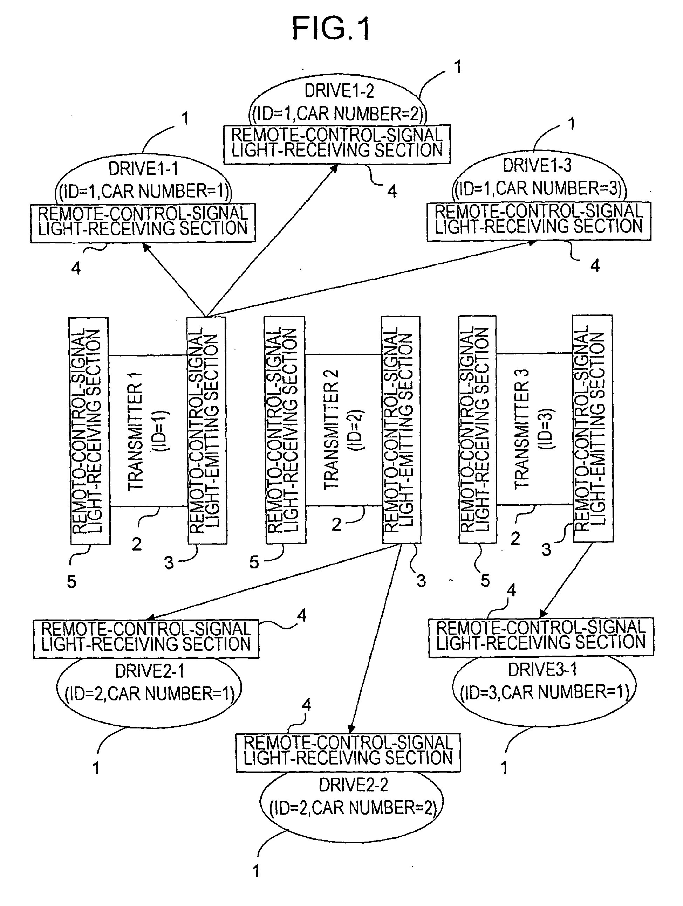

FIG. 1 is an illustration showing a schematic configuration of a remote control system of the present invention. In FIG. 1, a case is assumed in which six drives 1...1 are separately remote-controlled by three transmitters 2...2 at the same place.

Any one of the ID codes 1 to 4 is set to the drives 1...1 and transmitters 2...2 as transmitter-specifying information and any one of the car numbers 1 to 8 is set to the drives 1...1 and transmitters 2...2 as drive-specifying information. In the case of this embodiment, a combination between an ID code and a car number functions as the identification information for relating the transmitter 2 with the drive 1. Infrared radiation is used for remote control of each drive 1. Therefore, a remote-control-signal light-emitting section 3 is mounted on each transmitter 2 and a remote-control-signal light-receiving section 4 is mounted on each drive 1. Moreover, a remote-control-signal light-receiving section 5 is mounted on each transmitter 2 in order to synchronize data transmission from each transmitter 2.

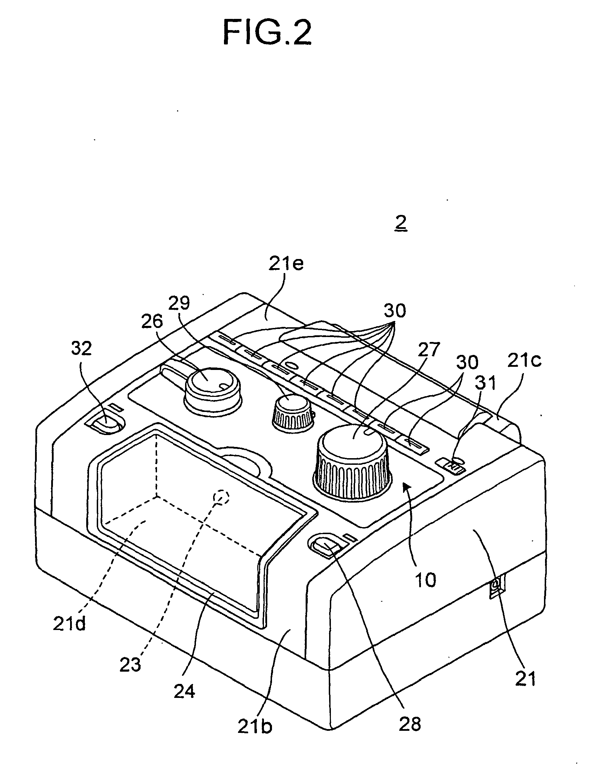

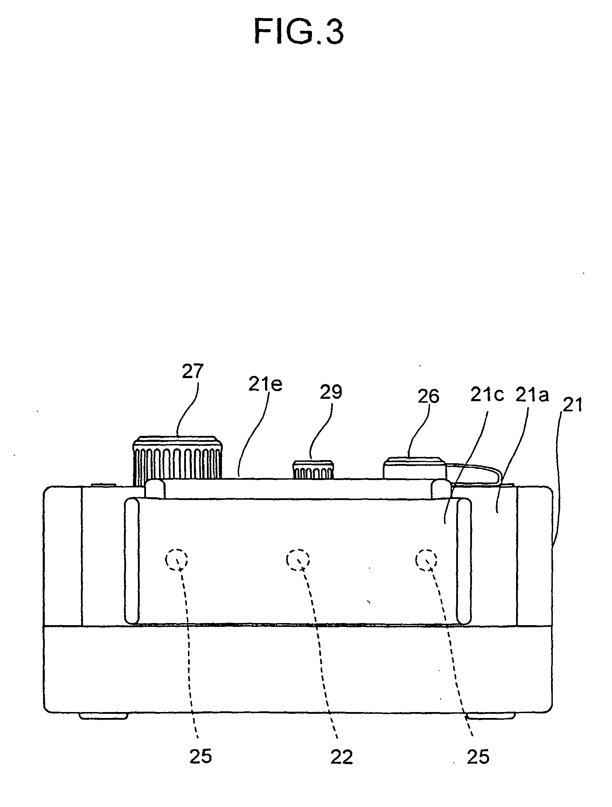

FIGS. 2 and 3 show details of the transmitter 2, in which FIG. 2 is a perspective view of the transmitter 2 viewed from the front side (user side) and FIG. 3 is a back view of the transmitter 2. As shown in these illustrations, the transmitter 2 has a casing 21 formed of a resin and the like. A light-emitting section 22 (corresponding to a remote-control-signal light-emitting section 3 in FIG. 1) for transmitting data to the drive 1 is set on the back 21a of the casing 21 and a light-emitting section 23 for transmitting the data for rewriting the identification information for the drive 1 is set at the front 21b of the casing 21. A cover 21c allowing infrared radiation to pass therethrough is set to the back 21a and the light-emitting section 23 is set to the inside of the cover 21c. Moreover, light-receiving sections 25 and 25 serving as the remote-control-signal light-receiving section 5 in FIG. 1 are set to the inside of the cover 21c.

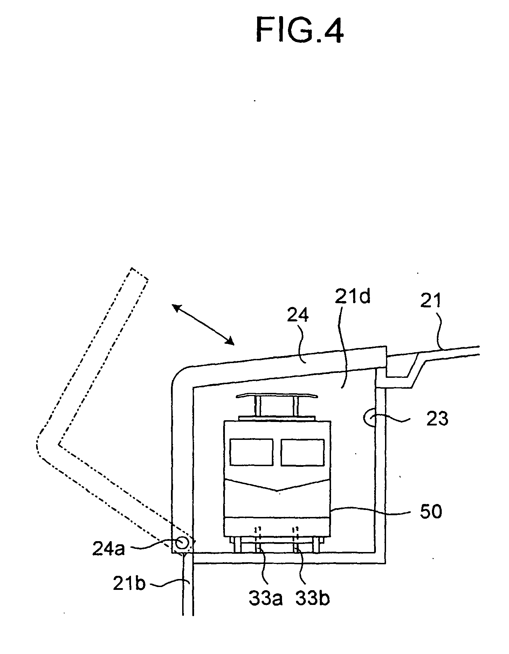

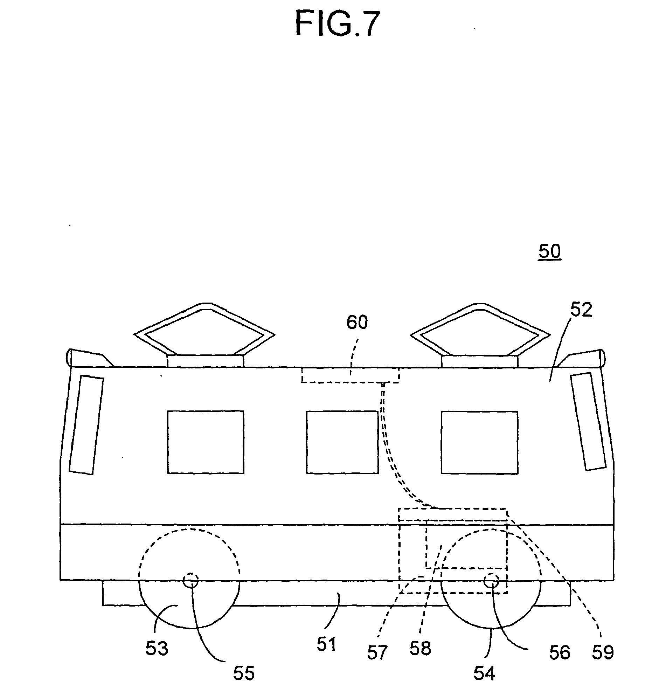

As shown also in FIG. 4, a concave portion 21d is formed at the front 21b of the casing 21 and covered by a lid 24. The lid 24 can be opened to the front side about a hinge 24a at the bottom end of the lid 24. The light-emitting section 23 is set to the face of the wall of the concave portion 21d. Charge terminals 33a and 33b are set on the bottom face of the concave portion 21d. These terminals 33a and 33b contact with a charge terminal of an electric-train model 50 (refer to FIG. 7) serving as the drive 1 housed in the concave portion 21d to charge a battery built in the electric-train model 50.

According to the above transmitter 2, it is possible to prevent the infrared radiation emitted from the light-emitting section 23 from leaking to the outside of the concave portion 21d by housing the drive 1 in the concave portion 21d and closing the lid 24. Therefore, it is possible to eliminate a fear that identification information for the drive 1 outside of the concave portion 21d is carelessly rewritten.

As shown in FIG. 2, an F/R switch 26 to be operated to switch forward and reverse rotations of the drive 1, a speed control dial 27 to be operated to set a speed, a rewrite control switch 28 to be operated to designate rewriting of identification information for the drive 1, an ID-code-setting switch 29 for setting an ID code of the transmitter 2, car-number selection switches 30...30 for designating car-number, a power-source switch 31, and a charge switch 32 are set to the upper face 21e of the casing 21 as an input unit 10.

The F/R switch 26 can be switched to forward-rotation position or reverse-rotation position and it outputs signals corresponding to these positions. The speed control dial 27 outputs a speed designation signal proportional to a rotation control amount from the initial position corresponding to the speed 0. The rewrite control switch 28 is a push-button switch that outputs an on-signal when it is pushed. The ID-code setting switch 29 can be switched at four positions corresponding to ID codes 1 to 4 and it outputs signals corresponding to these positions. By switching the ID-code setting switch 29, it is possible to select an ID of the transmitter 2 among IDs 1 to 4. The car-number selection switch 30 is a push-button switch that outputs an on-signal corresponding to a push control. Eight car-number selection switches 30 are provided correspondingly to car numbers 1 to 8 by one to one. By pushing any one of the car-number selection switches 30, it is possible to select a car number corresponding to the selected car-number selection switch 30.

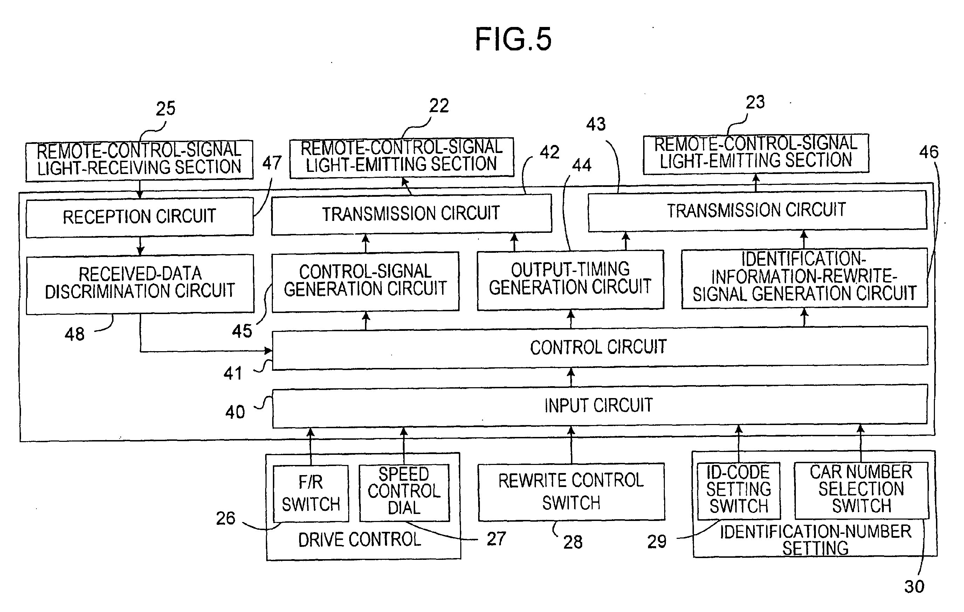

FIG. 5 shows a circuit configuration of the transmitter 2. Signals corresponding to operations of input units 26 to 30 are input to a control circuit 41 through an input circuit 40. The remote-control-signal light-emitting sections 22 and 23 are respectively constituted by including light-emitting device such as an LED and emit infrared radiation corresponding to a designation by a transmission circuit 42 or 43. The transmission circuits 42 and 43 output transmission data to the remote-control-signal light-emitting section 22 or 23 in accordance with the timing designated by an output-timing generation circuit 44. The output-timing generation circuit 44 counts time in accordance with a timer set value supplied from the control circuit 41. When the time corresponding to the timer set value elapses, the circuit 44 outputs a transmission designation to the transmission circuit 42 or 43. Frequencies of infrared-radiation carrier signals output from the remote-control-signal light-emitting sections 22 and 23 are the same in all transmitters 2.

Data to be output to the remote-control-signal light-emitting section 22 on the back 21a of the transmitter 2 is generated by the control-signal generation circuit 45. The transmission circuit 42 modulates the data generated by the control-signal generation circuit 45 in accordance with a remote-control-signal carrier signal to drive the remote-control-signal light-emitting section 22.

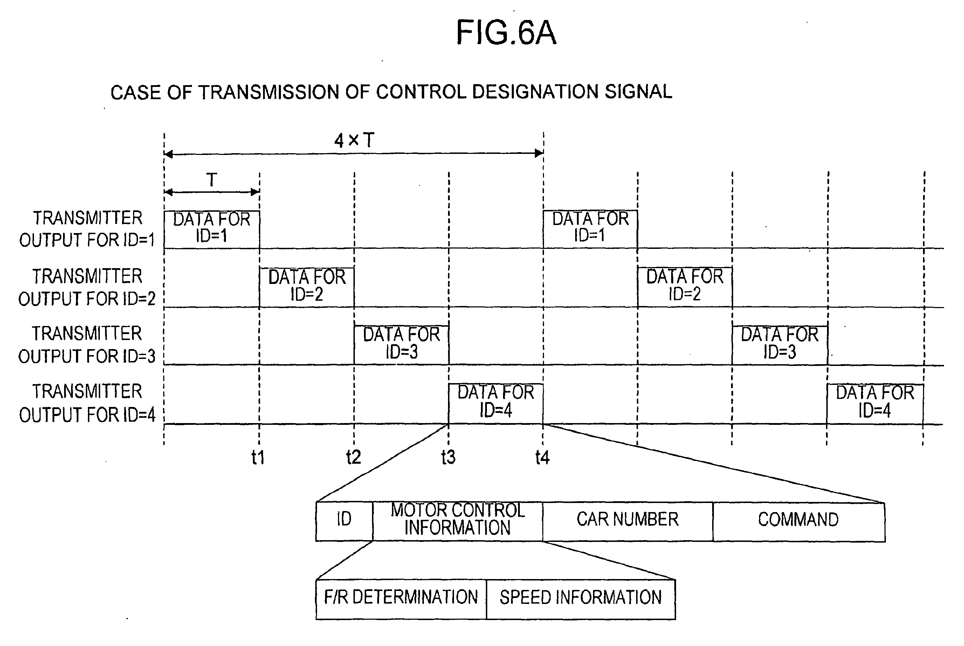

In this case, one-block remote-control data generated by the control-signal generation circuit 45 is constituted by an ID code, motor control information, a car number, and a command for realizing an additional function as shown in FIG. 6A. Moreover, the motor control information is constituted by information for designating whether forward direction or reverse direction (F/R determination) of the rotational direction of a motor and information for designating a motor-driving speed. Two-bit data corresponding to an ID code selected by the ID-code setting switch 29 is set to the ID-code part, one-bit data showing whether the F/R switch 26 is set to forward-rotation position or reverse-rotation position is set to the F/R-discriminating part of a motor, and five-bit data for designating a speed corresponding to a rotation control amount of the speed control dial 27 is set to the motor control information part. Three-bit data for designating any one of car numbers 1 to 8 selected by the car-number selection switch 30 is set to the car-number part. The command part is constituted by a predetermined number of bits and a code for designating an additional function is set to the command part according to necessity. The number of bits of the one-block remote-control data is always constant. Therefore, the time required to transmit the one-block remote-control data is also constant.

The remote-control-signal light-receiving section 25 shown in FIG. 5 receives the infrared radiation sent from another transmitter 2 and outputs a signal obtained by removing carrier components from the received infrared radiation to a reception circuit 47. The reception circuit 47 decodes a signal supplied from the remote-control-signal light-receiving section 25 into one-block remote-control data and outputs the data to a received-data discrimination circuit 48.

The received-data discrimination circuit 48 discriminates the ID code of the received data supplied from the reception circuit 47 and supplies the determination result to the control circuit 41. The control circuit 41 controls the output timing of the data supplied from the transmission circuit 42 in accordance with signals supplied from the received-data discrimination circuit 48 and input circuit 40. Thus, the data transmitted from another transmitter 2 is received to set the output timing of the data in order to prevent interference due to simultaneous transmission of remote-control data from a plurality of transmitters 2. This point is described below in detail.

FIG. 6A shows how to take the transmission timing when four transmitters 2 are simultaneously operated. As shown in FIG. 6A, infrared-radiation emission timings from the remote-control-signal light-emitting section 22 are set to periods different from each other in accordance with ID codes set to the transmitter 2 and the drive 1 to be controlled by the transmitter 2 in common.

The time length for one transmitter 2 to transmit a remote-control signal is equal to T and each transmitter 2 repeats transmission of a remote-control signal at a cycle corresponding to the number of transmitters 2 × transmission time length (=4T). Moreover, the transmission timing of each transmitter 2 is shifted every T from ID code = 1 in order. Because each transmitter 2 controls transmission timing in accordance with the above relation, it is possible to prevent transmission periods of four transmitters 2 from overlapping with each other. To realize the above transmission control, it is allowed for the transmitter 2 of ID code = 2 in FIG. 6A to control transmission timing as described below.

First, when receiving the data of ID code = 1 at the time t1, the transmitter 2 starts outputting the transmission data of its own and completes outputting the transmission data of its own at the time t2. When completing the transmission, the transmitter 2 checks the data received by the reception circuit 47 (refer to FIG. 5) to confirm that interference between signals does not occur. Thereafter, the transmitter 2 sets a transmission timer for counting the next output timing 3T later to start timer counting.

When receiving the remote-control data of ID code = 3 at the time t3, the transmitter 2 resets the transmission timer 2T later to start timer counting. When receiving the remote-control data of ID code = 4 at the time t4, the transmitter 2 resets the transmission timer 1T later to start timer counting.

Then, when the power source of the transmitter 2 of ID code = 1 is turned off or data cannot received from the transmitter 2 of ID code = 1 due to noises, it is allowed to start outputting the data of its own when counting by the transmission timer advances by the time T after receiving the data of ID code = 4. Moreover, even if signals from another transmitter 2 cannot be received, it is possible to continue outputting transmission data at the cycle 4T by using the time 3T set to the transmission timer when transmission of the data of its own is completed.

Though a case of using four transmitters 2 is described above, it is possible to control transmission timing even in the case of five transmitters or more by adding an ID code. The cycle of transmission timing of each transmitter 2 is equal to N×T (N denotes the number of transmitters). Moreover, it is allowed to set the entire cycle to a value larger than NT by setting a blank period in which no transmitter transmits data between periods in which transmitters 2 transmit data.

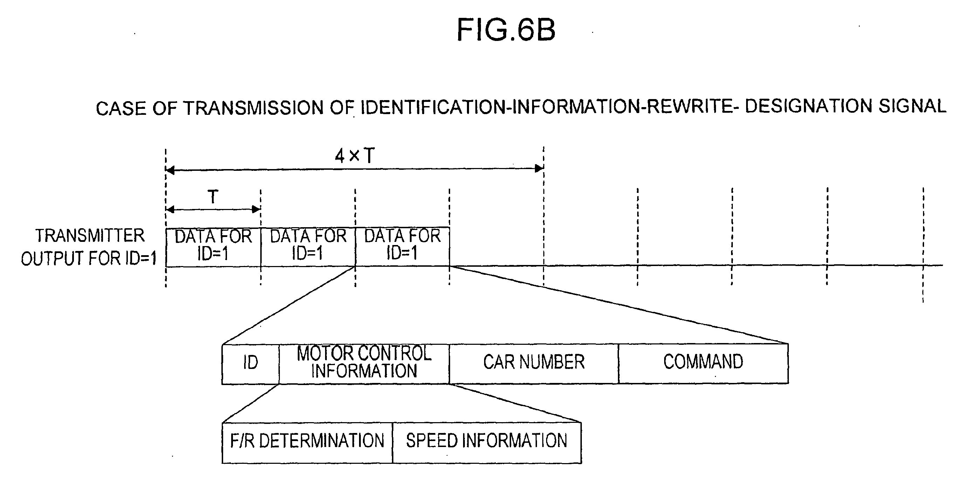

The transmission timing of the data sent from the light-emitting section 23 in FIG. 5 is consecutively set as shown in FIG. 6B (three consecutive times in the case of this example). The data to be output to the remote-control-signal light-emitting section 23 at the front 21b of the transmitter 2 is generated by an identification-information-rewrite-signal generation circuit 46 and the transmission circuit 43 drives the remote-control-signal light-emitting section 23 by modulating the data generated by the identification-information-rewrite-signal generation circuit 46 in accordance with a remote-control-signal carrier signal. The data generated by the identification-information-rewrite-signal generation circuit 46 has the same structure as that generated by the control-signal generation circuit 45 as shown in FIG. 6B. However, a specific code for designating rewriting of the ID code and car number of the drive 1 (hereafter referred to as rewrite designation code) is set to the command part of the above data as change-designating information. That is, in the case of this embodiment, data is transmitted from the remote-control-signal light-emitting section 23 through the control circuit 41, identification-information-rewrite-signal generation circuit 46, and transmission circuit 47 only when designating change of ID codes and car numbers from the transmitter 2 to the drive 1.

The control circuit 41 discriminates whether to transmit the data for operation control of the drive 1 or the data for change of identification information depending on the fact that the rewrite control switch 28 is turned on or not and supplies signals corresponding to operation states of the input units 26 to 30 to the control-signal generation circuit 45 when transmitting the data for operation control of the drive 1 and to the identification-information-rewrite-signal generation circuit 46 when transmitting the data for designating change of identification information. When the control-signal generation circuit 45 receives a signal, remote-control data for control of the drive 1 is generated correspondingly to operation states of the input units 26 to 30. When the identification-information-rewrite-signal generation circuit 46 receives a signal, remote-control data for change of the identification information for the drive 1 is generated correspondingly to operation states of the input units 28 to 30.

It is also allowed to communize the generation circuits 45 and 46 and alternatively transmit data from either of the remote-control-signal light-emitting sections 22 and 23 depending on the fact that the rewrite control switch 28 is turned on or not. In this case, for an ID code, motor control information, and a car number in one-block remote-control data, it is allowed to always set the data corresponding to operation states of the ID-code setting switch 29, F/R switch 26, speed control dial 27, and car-number selection switch 30 independently of the fact that the rewrite control switch 28 is turned on or not, set a rewrite designation code to the command part to transmit data from the remote-control-signal light-emitting section 23 only when the rewrite control switch 28 is turned on, and transmit data from the remote-control-signal light-emitting section 22 when controlling operations of the drive 1. Moreover, it is allowed to communize the remote-control-signal light-emitting sections 22 and 23 and transmit the data for operation control of the drive 1 and identification-information-rewriting data from the same light-emitting section.

The control circuit 41 is preferably constituted by combining a microcomputer with a predetermined program. It is allowed to constitute the transmission circuits 42 and 43, output-timing generation circuit 44, control-signal generation circuit 45, identification-information-rewrite-signal generation circuit 46, reception circuit 47, and received-data discrimination circuit 48 as logic circuits or constitute them by combining a microcomputer with a predetermined program similarly to the case of the control circuit 41. Moreover, it is allowed to unite at least one of the output-timing generation circuit 44, control-signal generation circuit 45, identification-information-rewrite-signal generation circuit 46, and received-data discrimination circuit 48 into the control circuit 41.

FIG. 7 is a side view showing an embodiment of the drive 1. In the case of this embodiment, the drive 1 is constituted as the small electric-train model 50. The electric-train model 50 has a chassis 51 and a body 52 put on the chassis 51. Front wheels 53 are provided for the front of the chassis 51 and rear wheels 54 are provided for the rear of the chassis 51. The front wheel 53 is rotatably set to the chassis 51 through a wheel shaft 55. The rear wheel 54 is set to a transmission gear 57 through the wheel 56. The transmission gear 57 transmits the rotation of a motor 58 serving as a driving source to a wheel shaft 56. A controller 59 constituted as a one-chip microcomputer is set above the transmission gear 57 and motor 58. The controller 59 controls operations of the motor 58 in accordance with the data sent from a remote-control-signal light-receiving section 60 set to the body 52.

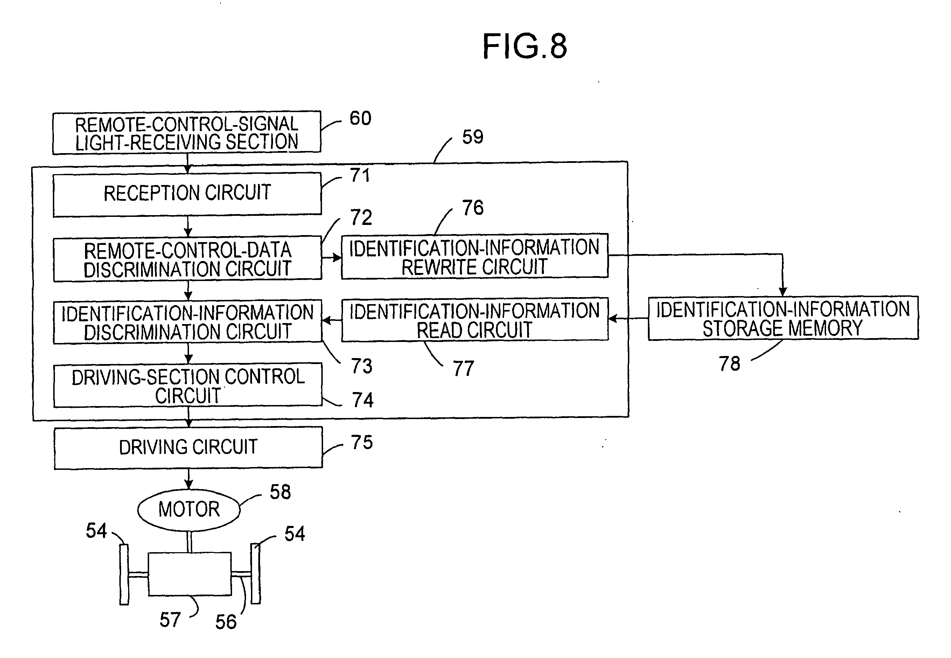

FIG. 8 shows a circuit configuration of a control system mounted on the electric-train model 50. The above remote-control-signal light-receiving section 60 is set to the car model 50. The remote-control-signal light-receiving section 60 receives the infrared radiation emitted from the transmitter 2 and outputs a signal obtained by removing carrier components from the received infrared radiation to a reception circuit 71. The reception circuit 71 decodes the signal supplied from the remote-control-signal light-receiving section 60 into one-block remote-control data and outputs the data to a remote-control-data discrimination circuit 72. The one-block remote-control data is shown in FIGS. 6A and 6B. The remote-control-data discrimination circuit 72 discriminates which is received, the data for controlling operations of the drive 1 or the data for designating rewriting (changing) of the identification information for the drive 1, in accordance with command part of the received data supplied from the reception circuit 71.

When the remote-control-data discrimination circuit 72 discriminates that the received data is the data for controlling operations of the drive 1, an identification-information read circuit 77 reads the identification information assigned to the drive 1 itself from an identification-information storage memory 78 and an identification-information discrimination circuit 73 compares the identification information included in received data with the identification information for the drive 1 itself. When these pieces of identification information coincide with each other, the received data is sent to a driving-section control circuit 74. Then, the driving-section control circuit 74 supplies a motor-driving signal to a driving circuit 75 in accordance with the motor control information included in the received data. The driving circuit 75 drives the motor 58 in accordance with the supplied motor-driving signal.

When the remote-control-data discrimination circuit 72 discriminates that received data is the data for designating rewriting of identification information, the identification information (comprising an ID code and a car number) included in the data is written in the identification-information storage memory 78 by the identification-information rewrite circuit 76. Thereby, the identification information written in the identification-information storage memory 78 is changed.

It is preferable that identification information is stored in the identification-information storage memory 78 without backup by a power source by using a nonvolatile memory such as an EEPROM. It is allowed to constitute the reception circuit 71, remote-control-data discrimination circuit 72, identification-information discrimination circuit 73, driving-section control circuit 74, driving circuit 75, identification-information rewrite circuit 76, and identification-information read circuit 77 as logic circuits or by combining a microcomputer with a predetermined program. Moreover, it is allowed to set an identification-information discrimination circuit, an identification-information read circuit, and an identification-information storage memory different from the identification-information discrimination circuit 73, identification-information read circuit 77, and identification-information storage memory 78 between the reception circuit 71 and remote-control-data discrimination circuit 72 and select received data before sending data to the remote-control-data discrimination circuit 72.

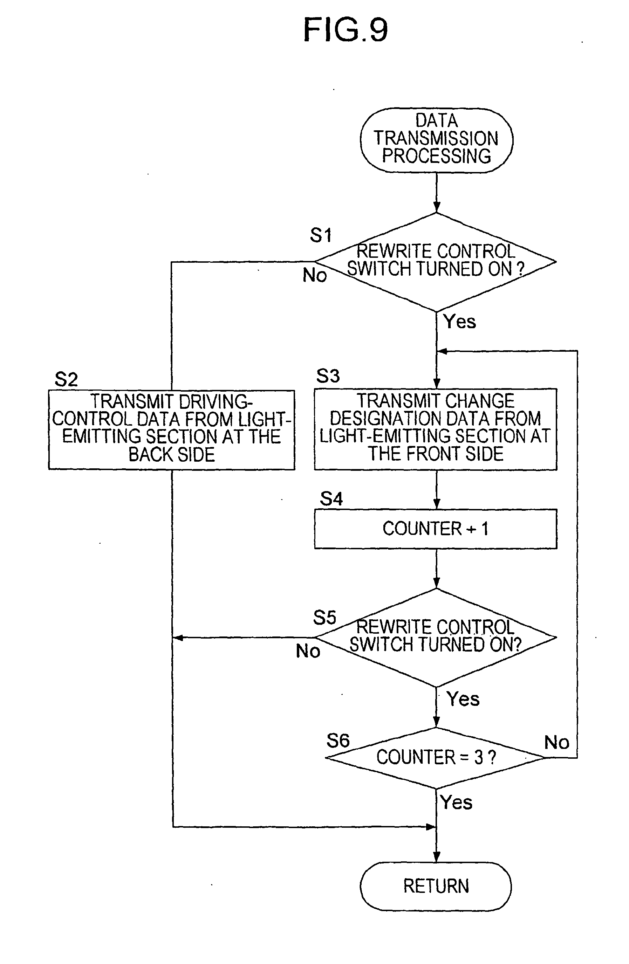

FIG. 9 is a flowchart showing operations of the transmitter 2 when transmitting data. Under the normal state, the transmitter 2 repeats data transmission at the timing shown in FIG. 6A and the processing in FIG. 9 is performed when the next transmission timing comes. In the case of this processing, the transmitter 2 first decides whether the rewrite control switch 28 is turned on or not (whether the switch 28 is pushed or not) (step S1). When the transmitter 2 decides that the switch 28 is not turned on, it generates the data for controlling operations of the motor 58 in accordance with the operation state of the F/R switch 26 or the like and transmits the data from the light-emitting section 22 (step S2). When the transmitter 2 decides that the rewrite control switch 28 is turned on, it generates the data for designating rewriting to the identification information set by the ID-code setting switch 29 and car-number selection switch 30 and transmits the data from the light-emitting section 23 at the front side (step S3). Then, the transmitter 2 adds 1 to a counter serving as a variable for measuring the number of consecutive transmission times of rewrite designation data (step S4) and then, decides whether the rewrite control switch 28 is continuously turned on or not (step S5). When the switch 28 is turned on, the transmitter 2 decides whether the counted value of the. counter reaches 3 (step S6). When the value is less than 3, the transmitter 2 returns to step S3 to retransmit the identification-information rewrite designation data. When the transmitter 2 decides in step S5 that the rewrite control switch 28 is turned off or decides in step S6 that the counted value reaches 3, it completes the processing in FIG. 9.

According to the above processing, when a user continuously pushes the rewrite control switch 28, the data for designating rewriting of identification information is transmitted from the light-emitting section 23 by three consecutive frames as shown in FIG. 6B. However, in the case other than the above, the data for drive controlling the motor 58 is transmitted from the light-emitting section 22.

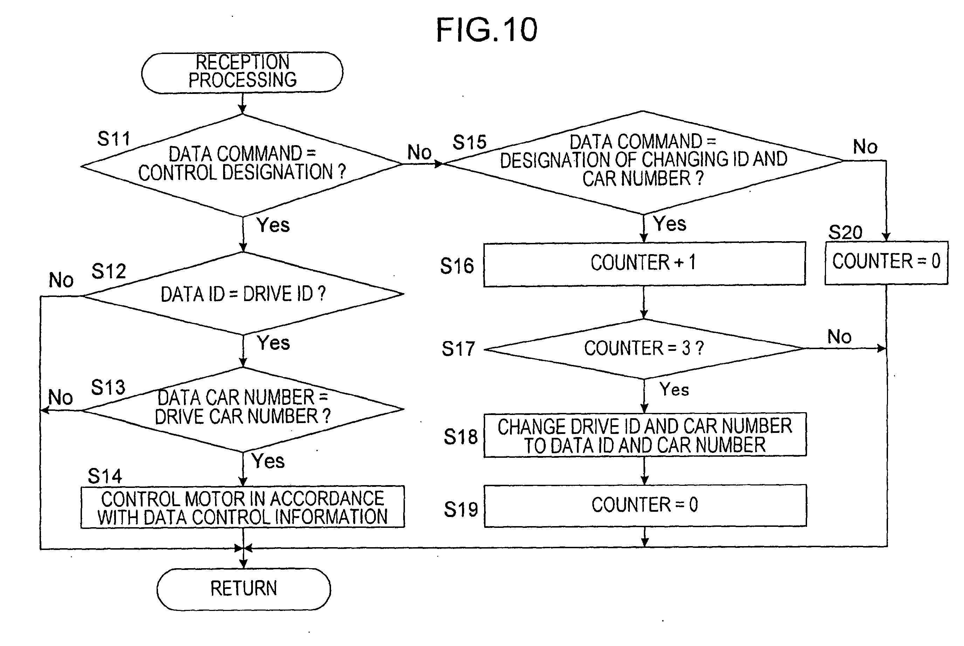

FIG. 10 is a flowchart showing the reception processing to be executed by the controller 59 of the electric-train model 50 serving as a drive when the controller 59 receives data from the transmitter 2. The controller 59 analyzes a command part included in received data to discriminate whether the received data is the data for controlling operations of the motor 58 or not (step S11). For example, the controller 59 decides the received data as the data for controlling operations of the motor 58 when a specific code for realizing a specific function is not set to the command part. Moreover, when generating the data for controlling operations of the motor 58 by the transmitter 2, it is allowed to include a specific code for designating the data for operation control in the command part and determine the data for operation control of the motor 58 or not depending on presence or absence of the specific code.

When the controller 59 decides that the received data is the data for controlling operations of the motor 58, it discriminates whether the ID code included in the data is the same as the ID code of its own recorded in the identification-information storage memory 78 (step S12). When the ID code included in the data is different from the ID code of its own, the controller 59 ignores the data and temporarily ends the processing in FIG. 10. In this case, the controller 59 waits for the next data to be received.

When the ID code included in the data is the same as the ID code of the self, the controller 59 decides whether the car number included in the data is the same as the car number of its own stored in the identification-information storage memory 78 (step S13). When the car number included in the data is different from the car number of the train model 50 itself, the controller 59 ignores the data and waits for the next data to be received. When the car number included in the data is the same as the car number of the train model 50 itself, the controller 59 controls the motor 58 in accordance with the control information included in the data (step S14) and then, waits for the next data to be received.

When the controller 59 decides that the received data is not the data for controlling operations of the motor 58 in step S11, it decides whether a rewrite designation code is included in the command part or not (step S15). When the rewrite designation cord is not included, the controller 59 resets a counter for discriminating a consecutive number of reception times of rewrite designation codes to 0 (step S20) and waits for the next data to be received. When the rewrite designation code is included, the controller 59 adds 1 to the counter (step S16) and decides whether a counted value reaches 3 or not, that is, whether the remote-control data including the rewrite designation code is received three times or not (step S17). When the counted value does not reach 3, waits for the next remote-control data to be received, when the counted value does reach 3, the controller 59 rewrites the ID code and car number recorded in the identification-information storage memory 78 to the ID code and car number included in the data received at that point of time (step S18). Thereafter, the controller 59 resets the counter to 0 (step S19) and waits for the next data to be received.

According to the above processing, ID codes and car numbers are changed when the electric-train model 50 serving as a drive receives the remote-control data including a rewrite designation code three times consecutively and operations of the motor 58 are controlled in accordance with motor control information only when the ID code and car number included in the data for driving the motor 58 coincide with each other when the data is received.

In the case of the above embodiment, ID codes and car numbers are simultaneously changed. However, it is also allowed to separately perform change of ID codes and change of car numbers by separately generating a command for changing ID codes and a command for changing car numbers. Moreover, it is allowed to first compare the ID code in received data with the ID code set to a drive (step S12) and then decide a command (step S11) so that car numbers of only a drive to which the ID code same as that of a transmitter is set can be changed. Furthermore, though a case is described in which identification information is changed when receiving identification-information-change designation data three times consecutively, it is allowed to change the identification information when receiving the data once or three times or more.

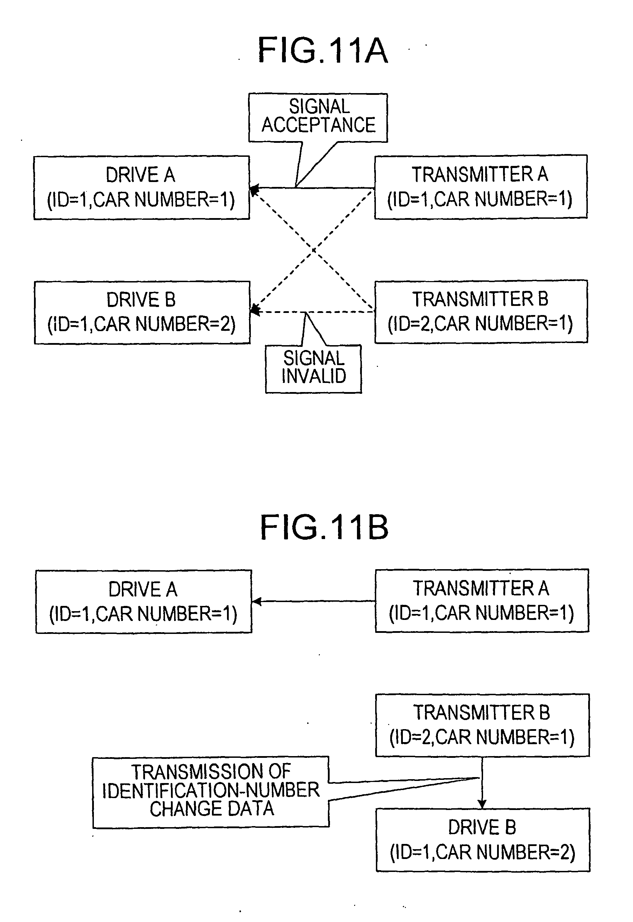

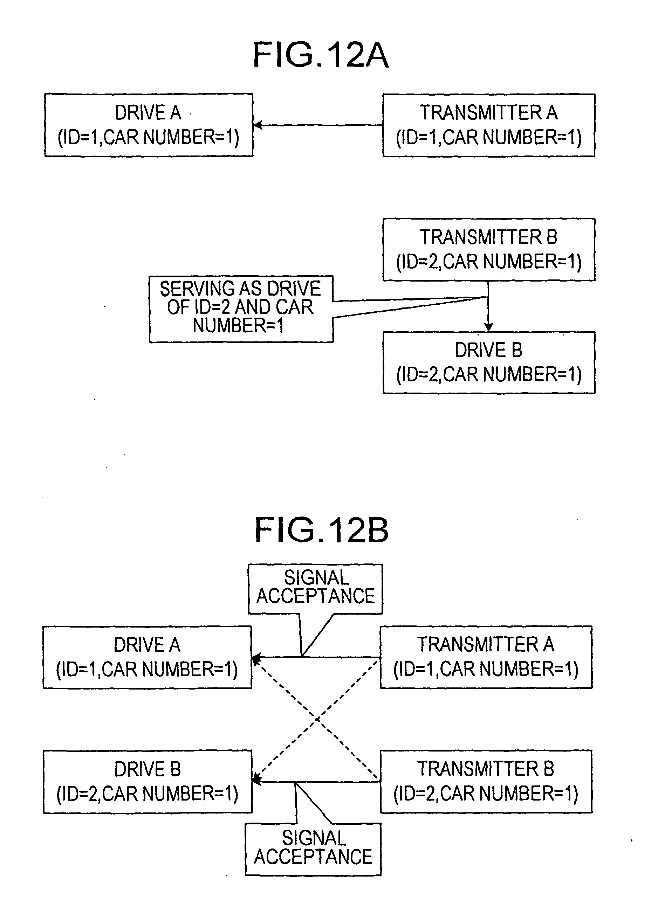

FIGS. 11A and 11B and Figs. 12A and 12B illustrate operation states when two transmitters and two drives are used. In Fig. 11A, the transmitter A can control the drive A having the same an ID code and a car number as its own. But the transmitter B can control neither drive A nor drive B. By transmitting identification-information change data from the transmitter B to the drive B (Fig. 11B), the identification information for the drive B is changed to the identification information for the transmitter B (Fig 12A) . As a result, the transmitters A and B can respectively control a drive having the same identification information as the information for its own (Fig 12B).

The present invention is not restricted to the above embodiment but it can be embodied by various embodiments. For example, a drive is not restricted to a train but it can use any one of embodiments simulating various movable bodies. A transmitter can use a portable type or fixed type. Moreover, it is allowed to use a portable unit such as a portable game machine or portable telephone as a transmitter by installing a specific program in the game machine or portable telephone.

A drive is not restricted to a unit simulating a train but it is allowed to include various units. It is allowed to control sections different from each other of an integrally constituted toy or model as drives different from each other.

As described above, according to the present invention, it is possible for a user to set the identification information set to a drive by a transmitter. Therefore, it is unnecessary to perform the production management and stock management of drives in accordance with the type of identification information and thus, labors required for production, circulation, and sale of drives can be reduced. A user does not have to always prepare special components for change of identification information and therefore, the user can easily enjoy remove control. Moreover, a transmitter can use at least some of circuits for transmitting operation control data to a drive for transmission of identification-information change data and a drive can use at least some of circuits for receiving operation control data for reception of identification-information change data. Therefore, it is possible to reduce the numbers of components of a transmitter and a drive and contribute to reduction of the transmitter and drive in cost and size.

## Claims

1. A system (2) for remote-controlling a drive (1, 50) in accordance with data sent from a transmitter; wherein the transmitter is provided with:
a data generation device (41, 45, 46) for generating the data including identification information for relating the transmitter with the drive, operation control information for controlling operations of the drive, and discrimination information for discriminating the data for operation control or the data for change of identification information in accordance with an operation of a predetermined input unit (10) performed by a user; and
a transmission device (22, 23, 42, 43) for transmitting the data,
and wherein the drive is provided with:
a reception device (4, 60) for receiving the data transmitted from the transmitter;
a storage device (78) for storing identification information assigned to the drive itself;
a first discrimination device (72) for discriminating whether received data is the data for operation control or the data for change of identification information in accordance with the discrimination information included in the received data;
a second discrimination device (73) for discriminating whether the received data is the data transmitted to the drive itself or not by comparing the identification information included in the received data with the identification information stored in the storage device;
a control device (74) for executing the operation control in accordance with the operation control information included in the data discriminated as the data for operation control and as the data transmitted to the drive itself; and
an identification-information change device (76) for changing the identification information stored in the storage device in accordance with the identification information included in the data discriminated as the data for change of the identification information,
wherein the identification information includes transmitter-specifying information for distinguishing a plurality of transmitters from each other and drive-specifying information for distinguishing a plurality of drives from each other;
the data generation device of the transmitter is configured to independently change each of the transmitter specifying information and the drive-specifying information included in the data in accordance wi th an operation of the input performed by the user;
the second discrimination device of the drive is configured to discriminate that the received data is the data transmitted to the drive itself when the transmitter specifying information and the drive-specifying information included in the received data coincide with the transmitter-specifying information and the drive specifying information stored in the storage device, and
the identification-information change device of the drive is configured to change the transmitter-specifying information and the drive specifying information stored in the storage device in accordance with the transmitter-specifying information and the drive-specifying information included in the data discriminated as the data for change of the identification information.

2. The system (2) according to claim 1, wherein when a predetermined identification-information-change designation operation is performed on the input unit (10), the data generation device (41, 45, 46) of the transmitter is configured to generate the data so that change-designating information for designating change of the identification information is added to the discrimination information and the identification information, which has been set through the input unit at the moment when the predetermined identification-information-change designation operation is performed, is included in the data, and
the first discrimination device (72) is configured to discriminate whether or not the received data is the data for change of the identification information based on whether or not the change-designating information is added to the discrimination information.

3. The system (2) according to claim 1 or 2, wherein the identification-information change device (76) is configured to change the identification information when a predetermined condition relating to the received data for change of the identification information is satisfied.

4. The system (2) according to any one of claims 1 to 3, wherein the storage device (78) of the drive includes a nonvolatile memory.

5. A transmitter (2) for remote-controlling a drive (1, 50), comprising:
a data generation device (41, 45, 46) for generating data including identification information for relating the transmitter with the drive, operation control information for controlling operations of the drive, and discrimination information for discriminating the data for operation control or the data for change of identification information in accordance with an operation of a predetermined input unit (10) performed by a user; and
a transmission device (22, 23, 42, 43) for transmitting the data,
wherein the identification information includes transmitter-specifying information for distinguishing a plurality of transmitters from each other and drive-specifying information for distinguishing a plurality of drives from each other, and
the data generation device is further configured to independently change each of the transmitter-specifying information and the drive-specifying information included in the data in accordance with an operation on of the input unit performed by the user.

6. The transmitter (2) according to claim 5, wherein when a predetermined identification-information-change designation operation is performed on the input unit (10), the data generation device (41, 45, 46) is further configured to generate the data so that change-designating information for designating the change of the identification information is added to the discrimination information and the identification information, which is set through the input unit when the change of the identification information is designated, is included in the data.

7. A drive (1, 50) to be controlled in accordance with data sent from a transmitter (2), comprising
a reception device (4, 60) for receiving the data transmitted from the transmitter, the data including identification information for relating the transmitter with the drive, operation control information for controlling operations of the drive, and discrimination information for discriminating the data for operation control or the data for change of identification information;
a storage device (78) for storing identification information assigned to the drive itself;
a first discrimination device (72) for discriminating whether received data is the data for operation control or the data for change of identification information in accordance with the discrimination information included in the received data;
a second discrimination device (73) for discriminating whether received data is the data transmitted to the drive itself or not by comparing the identification information included in the received data with the identification information stored in the storage device;
a control device (74) for executing operation control in accordance with the operation control information included in the data discriminated as the data for the operation control and as the data transmitted to the drive itself; and
an identification-information change device (76) for changing the identification information stored in the storage device in accordance with the identification information included in the data discriminated as the data for change of the identification information;
wherein the identification information includes transmitter-specifying information for distinguishing a plurality of transmitters from each other, and drive-specifying information for distinguishing a plurality of drives from each other, and
the second discrimination device is further configured to discriminate that the received data is the data transmitted to the drive itself when the transmitter-specifying information and the drive-specifying information included in the received data coincide with the transmitter-specifying information and drive-specifying information stored in the storage device.

8. The drive (1, 50) according to claim 7, wherein the first discrimination device (72) is further configured to discriminate whether or not the received data is the data for change of the identification information based on whether or not predetermined change-designating information is added to the discrimination information.

## Patentansprüche

1. System (2) zur Fernsteuerung eines Antriebes (1, 50) in Übereinstimmung mit von einem Sender gesendeten Daten, wobei der Sender versehen ist mit:
einer Datenerzeugungseinrichtung (41, 45, 46) zum Erzeugen der Daten unter Einschluss einer Identifikationsinformation zum In-Beziehung-Setzen des Senders mit dem Antrieb, einer Betriebssteuerinformation zur Steuerung von Betriebsweisen des Antriebes und einer Unterscheidungsinformation zum Unterscheiden der Daten zur Betriebssteuerung oder der Daten zur Änderung der Identifikationsinformation in Übereinstimmung mit einer Betätigung einer vorbestimmten Eingabeeinheit (10), die durch einen Nutzer ausgeführt wird, und
einer Übertragungseinrichtung (22, 23, 42, 43) zum Senden der Daten, und wobei der Antrieb versehen ist mit:
einer Empfangseinrichtung (4, 60) zum Empfangen der vom Sender ausgesandten Daten,
einer Speichereinrichtung (78) zum Speichern der dem Antrieb selbst zugeordneten Identifikationsinformation,
einer ersten Unterscheidungseinrichtung (72) zum Unterscheiden, ob empfangene Daten Daten zur Betriebssteuerung oder Daten zur Änderung der Identifikationsinformation in Übereinstimmung mit der in den empfangenen Daten enthaltenen Unterscheidungsinformation sind,
einer zweiten Unterscheidungseinrichtung (73) zum Unterscheiden, ob die empfangenen Daten Daten sind, die zum Antrieb selbst übertragen wurden, oder nicht, indem die in dem empfangenen Daten enthaltene Identifikationsinformation mit der in der Speichereinrichtung gespeicherten Identifikationsinformation verglichen wird,
einer Steuereinrichtung (74) zum Ausführen der Betriebssteuerung in Übereinstimmung mit der in den Daten, die als die Daten zur Betriebssteuerung und als die zum Antrieb selbst übermittelten Daten erkannt wurden, enthaltenen Betriebssteuerinformation, und
einer Identifikationsinformations-Änderungseinrichtung (76) zum Ändern der in der Speichereinrichtung gespeicherten Identifikationsinformation in Übereinstimmung mit der in den Daten, die als Daten zur Änderung der Identifikationsinformation erkannt wurden, enthaltenen Identifikationsinformation, wobei
die Identifikationsinformation sender-spezifizierende Information zum Unterscheiden einer Mehrzahl von Sendern voneinander und antriebs-spezifizierende Information zum Unterscheiden einer Mehrzahl von Antrieben voneinander enthält,
die Datenerzeugungseinrichtung des Senders konfiguriert ist, um unabhängig voneinander jede der sender-spezifizierenden Information und der antriebs-spezifizierenden Information, die in den Daten enthalten sind, in Übereinstimmung mit einer durch den Nutzer ausgeführten Betätigung der Eingabe zu ändern,
die zweite Unterscheidungseinrichtung des Antriebes konfiguriert ist, um zu bestimmen, dass die empfangenen Daten an den Antrieb selbst übermittelte Daten sind, wenn die sender-spezifizierende Information und die antriebs-spezifizierende Information, die in den empfangenen Daten enthalten sind, mit der sender-spezifizierenden Information und der antriebs-spezifizierenden Information übereinstimmen, die in der Speichereinrichtung gespeichert sind, und die Identifikationsinformations-Änderungseinrichtung des Antriebes konfiguriert ist, um die sender-spezifizierende und die antriebs-spezifizierende Information, die in der Speichereinrichtung gespeichert sind, in Übereinstimmung mit der sender-spezifizierenden Information und der antriebs-spezifizierenden Information zu ändern, die in den Daten enthalten sind, welche als die Daten zur Änderung der Identifikationsinformation erkannt wurden.

2. System (2) nach Anspruch 1, wobei, wenn an der Eingebeeinheit (10) ein vorbestimmter Identifikationsinformations-Änderungsbestimmungsvorgang ausgeführt wurde, die Datenerzeugungseinrichtung (41, 45, 46) des Senders konfiguriert ist, um die Daten derart zu erzeugen, dass Änderungsbestimmungsinformation zum Bestimmen der Änderung der Identifikationsinformation der Unterscheidungsinformation und der Identifikationsinformation hinzugefügt wird, welche über die Eingabeeinheit in dem Moment eingestellt wurde, wenn der vorbestimmte Identifikationsinformations-Änderungsbestimmungsvorgang ausgeführt wird, in den Daten enthalten ist, und
die erste Unterscheidungseinrichtung (72) konfiguriert ist, um zu bestimmen, ob die empfangenen Daten Daten zur Änderung der Identifikationsinformation, sind oder nicht, basierend darauf, ob die Änderungsbestimmungsinformation der Unterscheidungsinformation hinzugefügt ist oder nicht.

3. System (2) nach Anspruch 1 oder 2, wobei die Identifikationsinformations-Änderungseinrichtung (76) konfiguriert ist, um die Identifikationsinformation zu ändern, wenn eine vorbestimmte Bedingung bezüglich der empfangenen Daten zur Änderung der Identifikationsinformation erfüllt ist.

4. System (2) nach einem der Ansprüche 1 bis 3, wobei die Speichereinrichtung (78) des Antriebes einen nicht-flüchtigen Speicher einschließt.

5. Sender (2) zur Fernsteuerung eines Antriebes (1, 50), welcher aufweist:
eine Datenerzeugungseinrichtung (41, 45, 46) zum Erzeugen der Daten unter Einschluss einer Identifikationsinformation zum In-Beziehung-Setzen des Senders mit dem Antrieb, einer Betriebssteuerinformation zur Steuerung von Betriebsweisen des Antriebes und einer Unterscheidungsinformation zum Unterscheiden der Daten zur Betriebssteuerung oder der Daten zur Änderung der Identifikationsinformation in Übereinstimmung mit einer Betätigung einer vorbestimmten Eingabeeinheit (10), die durch einen Nutzer ausgeführt wird, und einer Übertragungseinrichtung (22, 23, 42, 43) zum Senden der Daten, und wobei der Antrieb versehen ist mit:
einer Empfangseinrichtung (4, 60) zum Empfangen der vom Sender ausgesandten Daten,
einer Speichereinrichtung (78) zum Speichern der dem Antrieb selbst zugeordneten Identifikationsinformation,
die Identifikationsinformation sender-spezifizierende Information zum Unterscheiden einer Mehrzahl von Sendern voneinander und antriebs-spezifizierende Information zum Unterscheiden einer Mehrzahl von Antrieben voneinander enthält,
die Datenerzeugungseinrichtung des Senders weiter konfiguriert ist, um unabhängig voneinander jede der sender-spezifizierenden Information und der antriebs-spezifizierenden Information, die in den Daten enthalten sind, in Übereinstimmung mit einer durch den Nutzer ausgeführten Betätigung der Eingabe zu ändern.

6. Sender (2) nach Anspruch 5, wobei, wenn an der Eingebeeinheit (10) ein vorbestimmter Identifikationsinformations-Änderungsbestimmungsvorgang ausgeführt wurde, die Datenerzeugungseinrichtung (41, 45, 46) des Senders weiter konfiguriert ist, um die Daten derart zu erzeugen, dass Änderungsbestimmungsinformation zum Bestimmen der Änderung der Identifikationsinformation der Unterscheidungsinformation und der Identifikationsinformation hinzugefügt wird, welche über die Eingabeeinheit in dem Moment eingestellt wurde, wenn der vorbestimmte Identifikationsinformations-Änderungsbestimmungsvorgang ausgeführt wird, in den Daten enthalten ist.

7. Antrieb (1, 50), der in Übereinstimmung mit von einem Sender (2) gesendeten Werten zu steuern ist, und welcher aufweist:
eine Empfangseinrichtung (4, 60) zum Empfangen der vom Sender übermittelten Daten, wobei die Datenidentifikationsinformation zum In-Beziehung-Setzen des Senders mit dem Antrieb, Betriebssteuerinformation zum Steuern von Betriebsweisen des Antriebes und Unterscheidungsinformation zum Unterscheiden der Daten zur Betriebssteuerung oder der Daten zur Änderung der Identifikationsinformation einschließen,
eine Speichereinrichtung (78) zum Speichern der dem Antrieb selbst zugeordneten Identifikationsinformation,
eine erste Unterscheidungseinrichtung (72) zum Unterscheiden, ob empfangene Daten Daten zur Betriebssteuerung oder Daten zur Änderung der Identifikationsinformation in Übereinstimmung mit der in den empfangenen Daten enthaltenen Unterscheidungsinformation sind,
eine zweite Unterscheidungseinrichtung (73) zum Unterscheiden, ob die empfangenen Daten Daten sind, die zum Antrieb selbst übertragen wurden, oder nicht, indem die in dem empfangenen Daten enthaltene Identifikationsinformation mit der in der Speichereinrichtung gespeicherten Identifikationsinformation verglichen wird,
eine Steuereinrichtung (74) zum Ausführen der Betriebssteuerung in Übereinstimmung mit der in den Daten, die als die Daten zur Betriebssteuerung und als die zum Antrieb selbst übermittelten Daten erkannt wurden, enthaltenen Betriebssteuerinformation, und
eine Identifikationsinformations-Änderungseinrichtung (76) zum Ändern der in der Speichereinrichtung gespeicherten Identifikationsinformation in Übereinstimmung mit der in den Daten, die als Daten zur Änderung der Identifikationsinformation erkannt wurden, enthaltenen Identifikationsinformation, wobei
die Identifikationsinformation sender-spezifizierende Information zum Unterscheiden einer Mehrzahl von Sendern voneinander und antriebs-spezifizierende Information zum Unterscheiden einer Mehrzahl von Antrieben voneinander enthält, und
die zweite Unterscheidungseinrichtung des Antriebes weiter konfiguriert ist, um zu bestimmen, dass die empfangenen Daten an den Antrieb selbst übermittelte Daten sind, wenn die sender-spezifizierende Information und die antriebs-spezifizierende Information, die in den empfangenen Daten enthalten sind, mit der sender-spezifizierenden Information und der antriebs-spezifizierenden Information übereinstimmen, die in der Speichereinrichtung gespeichert sind.

8. Antrieb (1, 50) nach Anspruch 7, wobei
die erste Unterscheidungseinrichtung (72) weiter konfiguriert ist, um zu bestimmen, ob die empfangenen Daten Daten zur Änderung der Identifikationsinformation sind oder nicht, basierend darauf, ob die Änderungsbestimmungsinformation der Unterscheidungsinformation hinzugefügt ist oder nicht.

## Revendications

1. Système (2) de commande à distance d'un entraînement (1, 50) en fonction de données envoyées par un émetteur, l'émetteur étant doté de :
un dispositif (41, 45, 46) de production de données qui produit des données, notamment des informations d'identification qui permettent de relier l'émetteur à l'entraînement, des informations de contrôle et fonctionnement qui contrôlent le fonctionnement de l'entraînement et des informations de distinction qui permettent de distinguer les données de contrôle de fonctionnement ou les données de modification des informations d'identification en fonction d'une intervention d'un utilisateur sur une unité prédéterminée d'introduction (10) et
un dispositif d'émission (22, 23, 42, 43) qui émet les données,
l'entraînement étant doté de :
un dispositif de réception (4, 60) qui reçoit les données émises par l'émetteur,
un dispositif de mémoire (78) qui conserve les informations d'identification attribuées à l'entraînement proprement dit,
un premier dispositif de distinction (72) qui distingue si les données reçues sont des données de contrôle de fonctionnement ou des données de modification des informations d'identification en fonction d'informations de distinction que contiennent les données reçues,
un deuxième dispositif de distinction (73) qui distingue si les données reçues sont ou non des données émises à destination de l'entraînement proprement dit, en comparant les informations d'identification que contiennent les données reçues à des informations d'identification conservées dans le dispositif de mémoire,
un dispositif de contrôle (74) qui exécute le contrôle du fonctionnement en fonction des informations de contrôle de fonctionnement que contiennent les données distinguées comme étant des données de contrôle de fonctionnement ou des données émises à destination de l'entraînement proprement dit et
un dispositif (76) de modification des informations d'identification qui modifie les informations d'identification conservées dans le dispositif de mémoire en fonction des informations d'identification que contiennent les données distinguées comme étant des données de modification des informations d'identification,
les informations d'identification contenant des informations de spécification de l'émetteur qui distinguent les uns des autres plusieurs émetteurs et les informations spécifiques à l'entraînement qui distinguent les uns des autres plusieurs entraînements,
le dispositif de production de données de l'émetteur étant configuré pour modifier indépendamment les informations de spécification d'émetteur et les informations de spécification d'entraînement que contiennent les données en fonction de l'intervention réalisée par l'utilisateur sur l'introduction,
le deuxième dispositif de distinction de l'entraînement étant configuré pour distinguer si les données reçues sont des données émises à destination de l'entraînement proprement dit lorsque les informations de spécification d'émetteur et les informations de spécification d'entraînement que contiennent les données reçues coïncident avec les informations de spécification d'émetteur et les informations de spécification d'entraînement conservées dans le dispositif de mémoire et
le dispositif de modification des informations d'identification de l'entraînement étant configuré de manière à modifier les informations de spécification d'émetteur et les informations de spécification d'entraînement que contient le dispositif de mémoire en fonction des informations de spécification d'émetteur et des informations de spécification d'entraînement que contiennent les données distinguées comme étant des données de modification des informations d'identification.

2. Système (2) selon la revendication 1, dans lequel, lorsqu'une opération prédéterminée de désignation d'une modification des informations d'identification est exécutée sur l'unité d'introduction (10), le dispositif (41, 45, 46) de production de données de l'émetteur est configuré pour produire les données de telle sorte que des informations de désignation de modification qui désignent une modification des informations d'identification soient ajoutées aux informations de distinction et que les informations d'identification qui ont été introduites par l'intermédiaire de l'unité d'introduction lorsque l'opération prédéterminée de désignation d'une modification des informations d'identification a été exécutée soient incluses dans les données,
le premier dispositif de distinction (72) étant configuré de manière à distinguer si les données reçues sont ou non des données de modification des informations d'identification selon que les informations de désignation de modification ont ou non été ajoutées aux informations de distinction.

3. Système (2) selon les revendications 1 ou 2, dans lequel le dispositif (76) de modification des informations d'identification est configuré de manière à modifier les informations d'identification lorsqu'une condition prédéterminée sur les données reçues de modification des informations d'identification est satisfaite.

4. Système (2) selon l'une quelconque des revendications 1 à 3, dans lequel le dispositif de mémoire (78) de l'entraînement comprend une mémoire non volatile.

5. Emetteur (2) de commande à distance d'un entraînement (1, 50) qui comprend :
un dispositif (41, 45, 46) de production de données qui produit des données qui contiennent des informations d'identification qui permettent de relier l'émetteur à l'entraînement, des informations de contrôle de fonctionnement qui contrôlent le fonctionnement de l'entraînement et des informations de distinction qui distinguent les données de contrôle de fonctionnement et les données de modification des informations d'identification en fonction de l'intervention d'un utilisateur sur une unité prédéterminée d'introduction (10) et
un dispositif d'émission (22, 23, 42, 43) qui émet des données,
les informations d'identification contenant des informations de spécification d'émetteur qui permettent de distinguer les uns des autres plusieurs émetteurs et des informations de spécification d'entraînement qui permettent de distinguer les uns des autres plusieurs entraînements,
le dispositif de production de données pouvant modifier indépendamment les informations de spécification d'émetteur et les informations de spécification d'entraînement que contiennent les données par intervention d'un utilisateur sur une unité d'introduction.

6. Emetteur (2) selon la revendication 5, dans lequel, lorsqu'une opération prédéterminée de désignation d'une modification des informations d'identification est exécutée sur l'unité d'introduction (10), le dispositif (41, 45, 46) de production de données produit des données de telle sorte que les informations de désignation de modification qui désignent la modification des informations d'identification soit ajoutée aux informations de distinction, les informations d'identification envoyées par l'intermédiaire de l'unité d'introduction lorsqu'une modification des informations d'identification a été désignée étant contenues dans les données.

7. Entraînement (1, 50) commandé en fonction de données émises par un émetteur (2), et qui comprend :
un dispositif de réception (4, 60) qui reçoit les données émises par l'émetteur, les données contenant les informations d'identification qui permettent de relier l'émetteur à l'entraînement, des informations de contrôle de fonctionnement qui contrôlent le fonctionnement de l'entraînement et des informations de distinction qui distinguent les données de contrôle de fonctionnement des données de modification d'informations d'identification,
un dispositif de mémoire (78) qui conserve les informations d'identification attribuées à l'entraînement proprement dit,
un premier dispositif de distinction (72) qui distingue si les données reçues sont des données de contrôle de fonctionnement ou des données de modification d'informations d'identification selon les informations de distinction que contiennent les données reçues,
un deuxième dispositif de distinction (73) qui distingue si les données reçues sont des données émises ou non à destination de l'entraînement proprement dit, en comparant les informations d'identification que contiennent les données reçues aux informations d'identification conservées dans le dispositif de mémoire,
un dispositif de contrôle (74) qui exécute le contrôle de fonctionnement selon les informations de contrôle de fonctionnement que contiennent les données distinguées comme étant des données de contrôle de fonctionnement et comme étant des données émises à destination de l'entraînement proprement dit et
un dispositif (76) de modification des informations d'identification qui modifie les informations d'identification conservées dans le dispositif de mémoire selon que les informations d'identification que contiennent les données distinguées comme étant des données de modification des informations d'identification,
les informations d'identification contenant des informations de spécification d'émetteur qui permettent de distinguer les uns des autres plusieurs émetteurs et des informations de spécification d'entraînement qui permettent de distinguer les uns des autres plusieurs entraînements et
le deuxième dispositif de distinction distinguant si les données reçues sont des données émises à destination de l'entraînement proprement dit lorsque les informations de spécification d'émetteur et des informations de spécification d'entraînement que contiennent les données reçues coïncident avec les informations de spécification d'émetteur et les informations de spécification d'entraînement conservées dans le dispositif de mémoire.

8. Entraînement (1, 50) selon la revendication 7, dans lequel le premier dispositif de distinction (72) distingue si les données reçues sont ou non des données de modification des informations d'identification si des informations prédéterminées de désignation de modification ont été ajoutées aux informations de distinction.
